# EUROPEAN PATENT APPLICATION

(11) **EP 2 677 221 A1**
(43) Date of publication of application: **25.12.2013**
(21) Application number: 12172361.3
(22) Date of filing: 18.06.2012
(51) Int. Cl.: F16L 9/147

(54) **Multilayer composite pipe and pipe connection**

(71) Applicant: Uponor Innovation AB, 73061 Virsbo (SE)
(72) Inventor: Järvenkylä, Jyri, 73061 Virsbo (SE)
(74) Representative: Papula Oy

(57) **Abstract**

The invention relates to a multilayer composite pipe. The multilayer composite pipe comprises an innermost layer (1) of plastic and at least two metal layers (2, 3) outside the innermost layer (1). The outermost layer (3) of the pipe is one of the metal layers. The shear modulus of the material of the outermost layer (3) is higher than that of the material forming the layer adjacent to the outermost layer, and the material forming the layer adjacent to the outermost layer is so soft that it has a shear modulus lower than 35 GPa.

## Description

### FIELD OF THE INVENTION

The invention relates to a multilayer composite pipe comprising an innermost layer of plastic and at least two metal layers outside the innermost layer.

The invention further relates to a pipe connection in which a pipe is connected by using a compression ring fitting.

Yet further the invention relates to a method of manufacturing a multilayer composite pipe.

### BACKGROUND OF THE INVENTION

Different multilayer composite pipes are well known and widely used. A multilayer composite pipe typically comprises at least one plastic layer and at least one metal layer.

Document DE 19511216 discloses a double-walled flexible hose having an inner layer and an outer layer. Between the inner layer and the outer layer there is a colour layer.

Document WO 02/101276 discloses a flexible plastic tube having a metallic appearance. The tube has an inner layer of plastic and a film outside the inner layer, which film has a metallic appearance. On top of the layer having the metallic appearance there is an outer at least partially transparent protective layer.

Document EP 0685675 discloses a flexible hose for sanitary applications, especially in the shower. The coloration and/or metallisation is achieved by a film which is hot pressed onto the pipe. Document EP 1197700 discloses a flexible hose having an inner layer of rubber or silicone and a decorative film of metallized plastic outside the inner layer.

Document DE 7714185 discloses a flexible tube made of plastic such as polyvinyl chloride and having a spiral-formed metal film wrapped around it. The metal film is covered with an outer plastic layer.

Document GB 2111164 discloses a composite pipe having a plastic inner layer which is surrounded by a longitudinally-fed metal foil coated on both sides with an adhesive. An outer layer of plastic is extruded onto the metal foil. The pipe is used in floor heating systems.

Document WO 01/85430 discloses a multilayer metal composite tube. A plastic lining is applied by extrusion to the interior of the metal tube and a plastic coating is applied to the exterior of the metal tube.

Document CA 1292154 discloses a metal pipe coated with a zinc film. A chromate film covers the zinc film. An intermediate layer consisting substantially of an epoxy resin covers the chromate film. A polyvinyl fluoride film covers the intermediate layer.

Document WO 2005014279 discloses a pipe that has an inner metal body. The inner metal body has a coating comprising a zinc layer, a silicate layer and a synthetic resin layer.

Document DE 29807448 discloses a structure having an inner layer of polyvinyl chloride and an outer layer of chromed brass.

Document EP 1316751 discloses a multilayer pipe. The multilayer pipe includes two tubular layers of plastics material, an inner layer, and an outer layer and two intermediate metal layers.

Chromed copper pipes are also known. A chromed copper pipe has excellent looks. However, it is very difficult to make a tight connection by using standard fittings in connection with chromed copper pipes. The connections easily start to leak again when touched. Minerals in the water inside the pipe together with variation in the pH value cause fast corrosion in the copper. The corrosion in the copper causes an unaesthetic green layer on the outer surface of the pipe at a leaking connection. Further, harmful substances may dissolve from copper into the liquid inside the copper pipe.

### BRIEF DESCRIPTION OF THE INVENTION

An object of the present invention is to provide a new type of a multilayer composite pipe and a pipe connection.

The invention is characterized by the features of the independent claims.

An idea of the invention is that the multilayer composite pipe comprises an innermost layer of plastic and at least two metal layers outside the innermost layer. The outermost layer of the pipe is one of the metal layers. The shear modulus (the coefficient of elasticity for a shearing force) of the material of the outermost layer is higher than that of the material forming the layer adjacent to the outermost layer, and the material forming the layer adjacent to the outermost layer is so soft that it has a shear modulus lower than 35 GPa, preferably lower than 32 GPa and more preferably lower than 30 GPa. Advantages of such a pipe include that thanks to the plastic inner layer the liquid inside the pipe is protected against harmful effects of the metal of the outer layers. Further, thanks to the metal layers it is easy to bend the pipe permanently to certain angles without spring back. Yet further, the pipe remains straight when assembled such that it can be used in surface mounting or in on-wall installation. The inner metal layer is protected from the inside and from the outside against corrosion by other layers. The outer appearance of the pipe is excellent because the outermost layer is one of the metal layers. Because of the softness i.e. moderate shear modulus of the material forming the layer adjacent to the outermost layer, the pipe is not too hard on the outside, whereby for example a compressing ring of a compressing ring fitting bites onto the outer surface of the pipe such that mechanical connections are achieved easily without the risk of leakage of the fitting.

### BRIEF DESCRIPTION OF THE DRAWINGS

In the following, the invention will be described in greater detail by means of preferred embodiments and with reference to the attached drawings, in which
Figure 1 schematically shows a cross section of a multilayer composite pipe, and
Figure 2 schematically shows a cross section of a multilayer composite pipe according to another embodiment.

In the figures, the invention is presented in a simplified manner for the sake of clarity. In the figures, like parts are designated by like reference numerals.

### DETAILED DESCRIPTION OF THE INVENTION

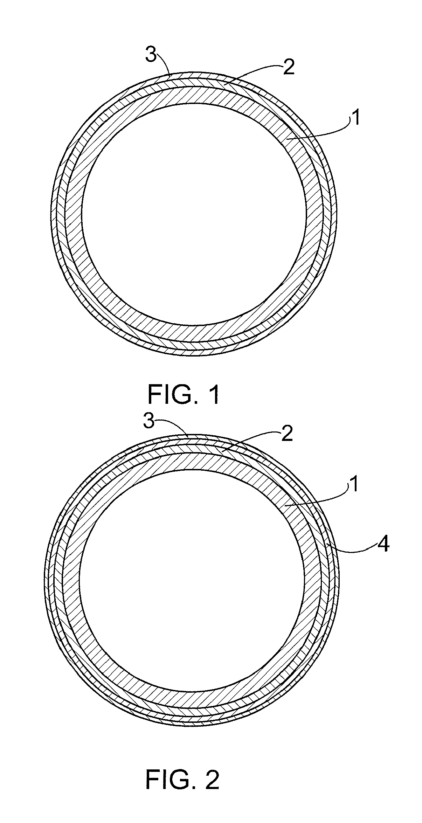

Figure 1 discloses a multilayer composite pipe having an innermost layer of plastic. The innermost layer 1 can be made of cross-linked polyethylene PEX, polyethylene of raised temperature resistance PERT, polypropylene PP or polybutylene -1 PB, for example.

A metal layer 2 is positioned outside the innermost layer 1. The metal layer 2 can be made of aluminium, for example. The aluminium layer 2 can be formed such that first a plastic pipe forming the innermost layer is extruded and then an aluminium sheet is wrapped around the plastic pipe. After wrapping the aluminium sheet, the seam of the sheet can be welded. It is also possible to extrude the aluminium layer on the innermost layer 1, whereby a seamless aluminium layer is formed. Preferably, glue, such as polyethylene-based glue, is applied between the innermost layer 1 and the metal layer 2. Alternatively the metal layer 2 is first formed by extrusion or wrapping and then the innermost layer together with the optional glue layer is extruded or otherwise forced inside the freshly formed metal layer. Because aluminium is rather soft and has a rather low melting point, it is easily machined or extruded. Thus, it is rather easy to provide the aluminium layer with an inner plastic layer.

The metal layer 2 is covered by an outermost layer 3. The outermost layer 3 protects the metal layer 2 from corrosion. The outermost layer 3 is also a metal layer. One example of a metal layer is an amorphous metallic layer. Preferably, the outermost layer 3 is made of chrome or titanium, for example. The outermost layer 3 is applied onto the metal layer 2 by using physical vapour deposition or metal spraying or any other suitable continuous process, for example. Before applying the outermost layer 3 the outer surface of the metal layer 2 can be suitably smoothened or polished by suitable means to render a glossy and pleasing shiny looks after applying the final metal deposition layer.

In this description, the outermost layer is the layer which defines the outer appearance of the pipe. Thus it is possible to coat the outermost layer 3 with clear lacquer or any other suitable material that does not change the outer appearance of the outermost layer. Such coating on the outermost layer 3 may prevent fingerprints from attaching to the surface of the outermost layer, for example.

Preferably the multilayer composite pipe is made by a continuous process. The innermost layer 1 of plastic can be extruded and the metal layer 2 outside of the innermost plastic layer 1 can be extruded or wrapped. The outermost layer 3 can be applied onto the metal layer 2 by using physical vapour deposition or metal spraying, for example.

The shear modulus of the material of the outermost layer 3 is higher than that of the material forming the metal layer 2. The shear modulus of the metal layer 2 is lower than 35 GPa. The shear modulus of copper is typically about 40 to 47 GPa, which means that in this embodiment the shear modulus of the material of the metal layer 2 is substantially lower than that of copper. Examples of the material of the metal layer 2 are aluminium and aluminium alloys having a shear modulus typically between 24 and 30 GPa.

Yet further, the shear modulus of the innermost layer 1 is lower than that of the metal layer 2. Thus, the shear modulus of the materials decreases from the outermost layer to the innermost layer. This feature provides the pipe with good bending properties. Good bending and jointing properties are still further secured by the fact that the layer thicknesses are growing from outside in, i.e. the thickness of each layer is larger than the thickness of any of the layers outwardly surrounding it.

Because the stiffness of the metal layer 2 is rather low such that material of the metal layer 2 has a shear modulus lower than 35 GPa, preferably lower than 32 GPa and more preferably lower than 30 GPa, the compressing ring of a compressing ring fitting bites on the outer surface of the pipe extremely well and thus it is easy to make a mechanical connection to the pipe such that no leakage occurs in the connection.

Because the innermost plastic layer 1 is surrounded by at least two metal layers the pipe has excellent fire endurance properties. It is possible to make the pipe such that it fulfils the requirements of class A2 of the standard DIN 4102, for example.

Preferably the compression ring fitting is metallic. Then it is possible to use a composite pipe having a plastic inner layer and an outer metal layer with metallic compression ring fittings to form pipe connections such that the whole system fulfils the requirements of class A2 of the standard DIN 4102.

The outer diameter of the pipe may vary between 10 and 50 mm, for example. The thickness of the innermost layer 1 may vary between 1.0 and 4.0 mm, for example. The thickness of the metal layer 2 may vary between 0.1 and 0.4 mm, for example. The thickness of the outermost layer 3 may vary between 10 and 200 nanometers, for example.

The metal layer 2 is preferably near the outer surface of the pipe. Thus, the innermost layer 1 preferably forms more than 80% of the thickness of the wall of the pipe. In such a solution, the bending resistance of the relatively soft innermost layer is in good proportion to the bending resistance of the stiffer metal layer, which means that the pipe remains straight extremely well. Correspondingly, when the pipe is bent, the cross section does not flatten as much as with pipes where the innermost layer is proportionally thinner. Yet further, after bending, the pipe shown in Figure 1 remains bent, so it does not straighten easily.

Figure 2 discloses an embodiment wherein an outer plastic layer 4 is provided between the metal layer 2 and the outermost layer 3. The outer plastic layer 4 may be made of acrylonitride butadiene styrene ABS, for example. The outer plastic layer 4 may be extruded onto the metal layer 2, for example. The thickness of the outer plastic layer 4 may vary between 0.1 and 0.5 mm, for example. In this embodiment, glue may be provided between the metal layer 2 and the innermost layer 1 and between the metal layer 2 and the outer plastic layer 4.

Outside the outer plastic layer 4 there is the outermost layer 3. Also in this embodiment, the outermost layer may be applied onto the outer plastic layer 4 by using physical vapour deposition, for example. Also in this embodiment the shear modulus of the material forming the layer adjacent to the outermost layer, that is the outer plastic layer 4, is lower than 35 GPa. In fact in this embodiment the shear modulus is in the order of 1 GPa. A preferred construction is such where the innermost plastic layer is by range about 10 times thicker than the metal layer 2 which in turn is about 100 times thicker than the outermost metal layer.

In some cases, the features disclosed in this description can be used as such, regardless of other features. On the other hand, the features disclosed in this description can be combined in order to form various combinations.

It will be obvious to a person skilled in the art that, as technology advances, the inventive concept can be implemented in various ways. The invention and its embodiments are not limited to the examples described above but may vary within the scope of the claims.

## Claims

1. A multilayer composite pipe comprising an innermost layer (1) of plastic and at least two metal layers (2, 3) outside the innermost layer, **characterized in that** the outermost layer (3) of the pipe is one of the metal layers,
that the shear modulus of the material of the outermost layer (3) is higher than that of the material forming the layer adjacent to the outermost layer, and
that the material forming the layer adjacent to the outermost layer is so soft that it has a shear modulus lower than 35 GPa.

2. A pipe as claimed in claim 1, **characterized in that** the material forming the layer adjacent to the outermost layer has a shear modulus lower than 32 GPa.

3. A pipe as claimed in claim 1 or 2, **characterized in that** the material forming the layer adjacent to the outermost layer has a shear modulus lower than 30 GPa.

4. A pipe as claimed in any one of the preceding claims, **characterized in that** the thickness of the outermost layer (3) is smaller than 200 nanometres.

5. A pipe as claimed in any one of the preceding claims, **characterized in that** the material of the outermost layer (3) is chrome or titanium.

6. A pipe as claimed in any one of the preceding claims, **characterized in that** the material of the layer adjacent to the outermost layer is aluminium or aluminium alloy.

7. A pipe as claimed in any one of the preceding claims, **characterized in that** the shear modulus of the material in each inner layer is lower than the shear modulus of the material in an outer layer.

8. A pipe as claimed in any one of the claims 1 to 5, **characterized in that** the layer adjacent to the outermost layer is an outer plastic layer (4).

9. A pipe connection in which a pipe is connected by using a compression ring fitting, **characterized in that** the pipe is a pipe according to any one of the claims 1 to 8.

10. A method of manufacturing a multilayer composite pipe comprising an innermost layer (1) of plastic and at least one first metal layer (2) outside the innermost layer, **characterized by**
forming the innermost layer (1) of plastic by extrusion,
forming the first metal layer (2) by extrusion or wrapping, and applying a second metal layer (3) on to the first metal layer (2) by using physical vapour deposition or metal spraying or any other continuous process such that the multilayer composite pipe is manufactured by a continuous process.
